# EUROPEAN PATENT APPLICATION

(11) **EP 4 749 789 A1**
(43) Date of publication of application: **27.05.2026**
(21) Application number: 25208740.8
(22) Date of filing: 15.10.2025
(51) Int. Cl.: H01M 50/209, H01M 50/358, H01M 50/367

(54) **ELECTRICITY STORAGE APPARATUS**

(30) Priority: 21.11.2024 JP 2024202908
(71) Applicant: TOYOTA JIDOSHA KABUSHIKI KAISHA, Toyota-shi, Aichi-ken 471-8571 (JP)
(72) Inventor: IWATA, Makoto, Toyota-shi, Aichi-ken, 471-8571 (JP); ISHIKAWA, Shotaro, Toyota-shi, Aichi-ken, 471-8571 (JP); FUJIWARA, Shunsuke, Toyota-shi, Aichi-ken, 471-8571 (JP); NAKAMURA, Soichiro, Toyota-shi, Aichi-ken, 471-8571 (JP); NAKANO, Takahiko, Toyota-shi, Aichi-ken, 471-8571 (JP); SUZUKI, Kosuke, Toyota-shi, Aichi-ken, 471-8571 (JP); ISHIZUKA, Masahiro, Toyota-shi, Aichi-ken, 471-8571 (JP); MATSUO, Kensuke, Toyota-shi, Aichi-ken, 471-8571 (JP); KUMAZAWA, Kazuya, Toyota-shi, Aichi-ken, 471-8571 (JP)
(74) Representative: Winter, Brandl - Partnerschaft mbB

(57) **Abstract**

An electricity storage apparatus (10) includes a plurality of electricity storage cells (100), a bottom wall (212), and a panel member (230). A safety valve (SV) is provided on a lower surface of each electricity storage cell (100). The bottom wall (212) includes an upper plate portion (212A) and a lower plate portion (212B). The upper plate portion (212A) has at least two upper through-holes (h1) provided in positions facing the safety valve (SV). The lower plate portion (212B) has at least one lower through-hole (h2) provided in a position facing at least two upper through-holes (h1). A length (L2) of the lower through-hole (h2) in one direction (DR1) is greater than a length (L1) of each of the upper through-holes (h1) in the one direction (DR1).

## Description

### BACKGROUND OF THE INVENTION

### 1. Field of the Invention

The present disclosure relates to an electricity storage apparatus.

### 2. Description of Related Art

For example, in Japanese Unexamined Patent Application Publication No. 2023-126584 (JP 2023-126584 A), a battery including a plurality of cells, a case housing the cells, and a protection member that protects a bottom part of the case is disclosed. On a bottom surface of each cell, a relief mechanism is provided. In the bottom part of the case, an escape structure is provided. Emissions of the cell emitted from the relief mechanism pass through the escape structure and flow into a collection cavity formed between the bottom part of the case and the protection member.

### SUMMARY OF THE INVENTION

In the battery described in JP 2023-126584 A, there is a concern that some of gas contained in the emissions emitted from one cell may head toward a cell adjacent to the one cell and the like without passing through the escape structure.

The present disclosure provides an electricity storage apparatus capable of reducing cases in which gas contained in emissions emitted from one electricity storage cell comes into contact with an electricity storage cell adjacent to the one electricity storage cell.

An electricity storage apparatus according to a first aspect of the present disclosure includes a plurality of electricity storage cells, a bottom wall, and a panel member. The electricity storage cells are arranged along one direction. The bottom wall is disposed below the electricity storage cells. The panel member is provided below the bottom wall and defines a smoke exhaust passage with the bottom wall. A safety valve is provided on a lower surface of each of the electricity storage cells. The bottom wall includes an upper plate portion provided below the electricity storage cells, and a lower plate portion provided below the upper plate portion. The upper plate portion includes at least two upper through-holes, each provided in a position facing a corresponding one of the safety valves. The lower plate portion includes at least one lower through-hole provided in a position facing the at least two upper through-holes. The length of the lower through-hole in the one direction is greater than the length of each of the upper through-holes in the one direction.

In the electricity storage apparatus according to the first aspect of the present disclosure, the at least one lower through-hole may be provided in a position that overlaps in an up-down direction with at least part of each of a pair of the upper through-holes adjacent to each other in the one direction.

In the electricity storage apparatus according to the first aspect of the present disclosure, the at least one lower through-hole may be configured by a single through-hole extending from a position that overlaps with the safety valve of one of the electricity storage cells disposed on a first end side in the one direction to a position that overlaps with the safety valve of one of the electricity storage cells disposed on a second end side in the one direction.

The electricity storage apparatus according to the first aspect of the present disclosure may further include a protection member provided on the bottom wall, and the protection member may include a heat insulation member configured to close each of the at least two upper through-holes.

The electricity storage apparatus according to the first aspect of the present disclosure may further include a protection member provided on the bottom wall, and the protection member may include a plurality of cylinder portions each protruding toward the panel member from a corresponding one of the at least two upper through-holes.

In the electricity storage apparatus according to the first aspect of the present disclosure, a lower end portion of the protection member may be spaced apart from the panel member to an upper side of the panel member.

With the present disclosure, it becomes possible to provide the electricity storage apparatus capable of reducing cases in which the gas contained in the emissions emitted from one electricity storage cell comes into contact with the electricity storage cell adjacent to the one electricity storage cell.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view schematically showing a vehicle including an electricity storage apparatus in an embodiment of the present disclosure;
FIG. 2 is a perspective view schematically showing the electricity storage apparatus;
FIG. 3 is a plan view schematically showing the electricity storage apparatus with an upper cover removed;
FIG. 4 is a sectional view taken along line IV-IV in FIG. 3;
FIG. 5 is a perspective view schematically showing a lower case;
FIG. 6 is a sectional view schematically showing a modification of a bottom wall;
FIG. 7 is a sectional view schematically showing a modification of a protection member;
FIG. 8 is a perspective view schematically showing a modification of the bottom wall;
   and
FIG. 9 is a sectional view schematically showing the modification of the bottom wall.

### DETAILED DESCRIPTION OF EMBODIMENTS

An embodiment of the present disclosure is described with reference to the drawings. In the drawings referred to below, the same members or members equivalent thereto are denoted by the same reference signs.

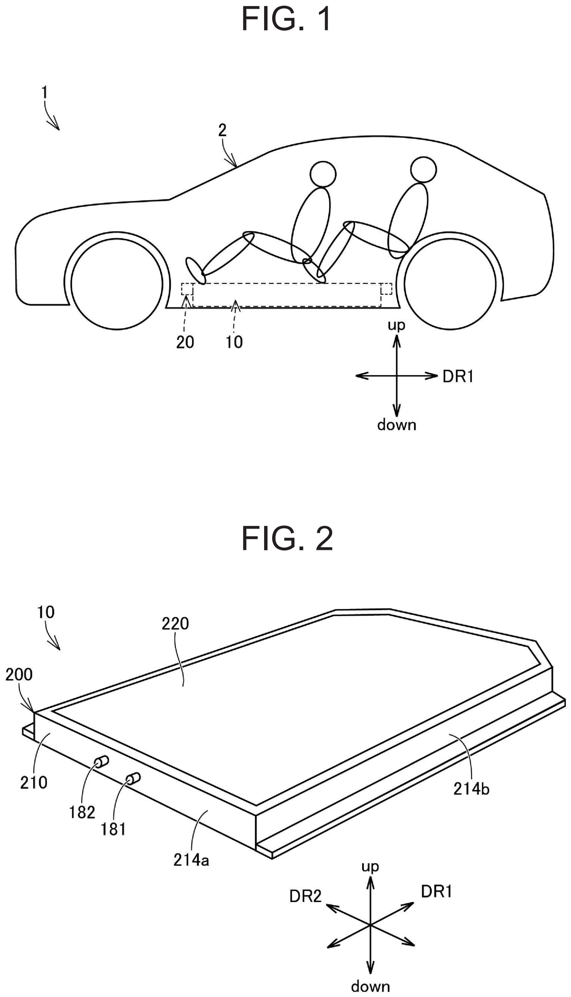

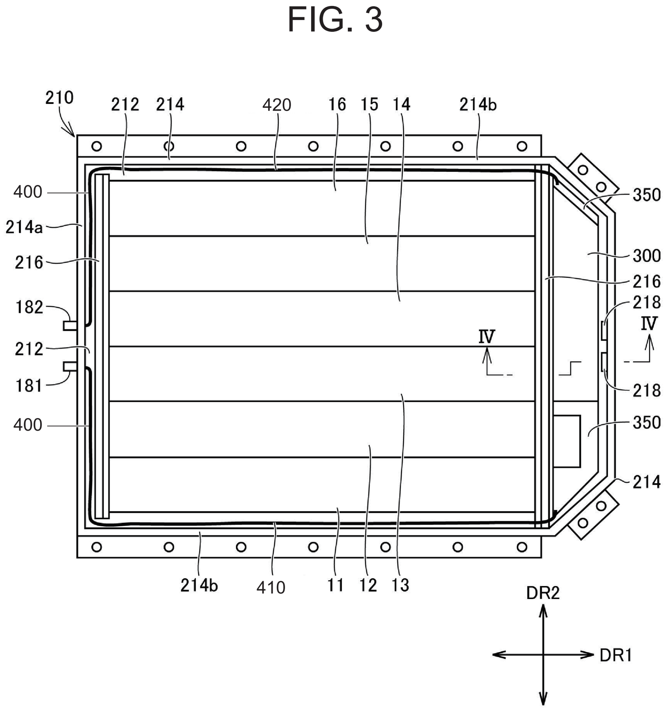

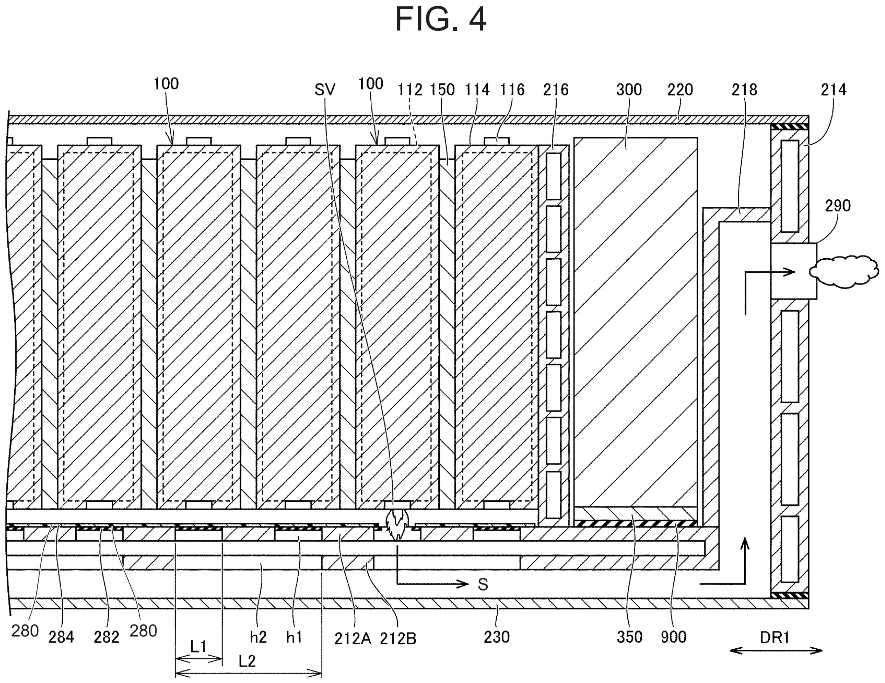

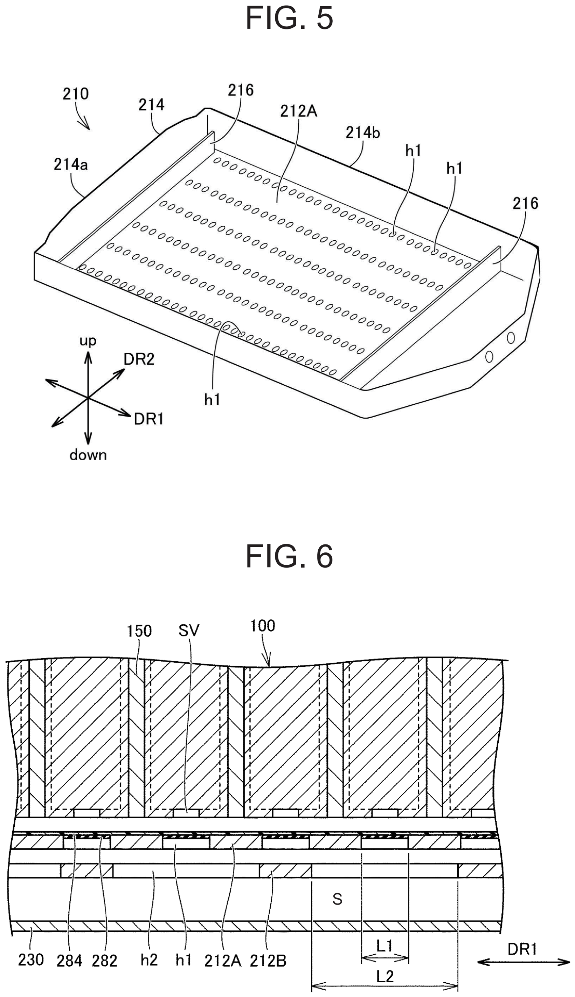

FIG. 1 is a view schematically showing a vehicle including an electricity storage apparatus in the embodiment of the present disclosure. FIG. 2 is a perspective view schematically showing the electricity storage apparatus. FIG. 3 is a plan view schematically showing the electricity storage apparatus with an upper cover removed. FIG. 4 is a sectional view taken along line IV-IV in FIG. 3. FIG. 5 is a perspective view schematically showing a lower case.

As shown in FIG. 1, a vehicle 1 includes a vehicle main body 2 and an electricity storage apparatus 10. Examples of the vehicle 1 are a hybrid electric vehicle, a plug-in hybrid electric vehicle, and a battery electric vehicle.

As shown in FIG. 1 and FIG. 2, the vehicle main body 2 includes a frame member 20. The frame member 20 is disposed on a bottom portion of the vehicle main body 2. The frame member 20 is formed in a substantially quadrilateral column shape that surrounds the electricity storage apparatus 10.

The electricity storage apparatus 10 is attached to the frame member 20. As shown in FIG. 1 to FIG. 4, the electricity storage apparatus 10 includes six electricity storage stacks 11 to 16, a casing 200, equipment 300, an equipment cooler 350, and refrigerant piping 400. The number of the electricity storage stacks is not limited to six.

Each of the electricity storage stacks 11 to 16 has a rectangular parallelepiped shape that is long in a first direction DR1. As shown in FIG. 3, the six electricity storage stacks 11 to 16 are arranged along a second direction DR2 orthogonal to both of the first direction DR1 and an up-down direction. In the present embodiment, the first direction DR1 is equivalent to a front-rear direction of the vehicle, and the second direction DR2 is equivalent to a left-right direction (width direction) of the vehicle. Each of the electricity storage stacks 11 to 16 includes at least one electricity storage cell 100. In the present embodiment, each of the electricity storage stacks 11 to 16 includes a plurality of electricity storage cells 100 and a plurality of cooling plates 150.

The electricity storage cells 100 are disposed so as to be arranged in the first direction DR1. As shown in FIG. 4, each of the electricity storage cells 100 has an electrode body 112, a cell case 114, and a pair of external terminals 116.

The electrode body 112 may be configured by a rolled body in which a positive electrode sheet and a negative electrode sheet are rolled via a separator or may be configured by a laminated body in which a positive electrode sheet and a negative electrode sheet are laminated via a separator. The electrode body 112 is formed in a shape that is long in the second direction DR2.

The cell case 114 houses the electrode body 112. The cell case 114 is formed in a rectangular parallelepiped shape. The cell case 114 is formed by metal such as aluminum. A safety valve SV is provided on a lower surface of the cell case 114.

The external terminals 116 are provided on an upper surface of the cell case 114. The external terminals 116 are provided in positions spaced apart from each other in a width direction of the cell case 114. The width direction of the cell case 114 is equivalent to the second direction DR2.

As shown in FIG. 4, each of the cooling plates 150 is disposed between a pair of the electricity storage cells 100 adjacent to each other in the first direction DR1. Each of the cooling plates 150 is formed in a flat plate shape that is long in the second direction DR2. Each of the cooling plates 150 has a flow path (not shown) through which a refrigerant flows along the second direction DR2.

The casing 200 houses the six electricity storage stacks 11 to 16. As shown in FIG. 2 to FIG. 5, the casing 200 has a lower case 210, an upper cover 220, and a panel member 230.

The lower case 210 is open upward. The lower case 210 may be formed by metal such as aluminum. The lower case 210 has a bottom wall 212, a peripheral wall 214, and a pair of partition walls 216.

The bottom wall 212 is positioned below each of the electricity storage stacks 11 to 16. The bottom wall 212 has an upper plate portion 212A and a lower plate portion 212B. As shown in FIG. 4, a space is provided between the upper plate portion 212A and the lower plate portion 212B. As a result, the bottom wall 212 is formed in a hollow shape. The same applies to FIG. 5. The bottom wall 212 may be formed by extrusion molding.

The upper plate portion 212A is provided below each of the electricity storage stacks 11 to 16. The upper plate portion 212A may be formed in a flat plate shape. The upper plate portion 212A has at least two upper through-holes h1, each provided in a position facing a corresponding one of the safety valves SV. At least two upper through-holes h1 are arranged in the first direction DR1 at an interval. In the present embodiment, at least two upper through-holes h1 include a plurality of upper through-holes h1. The upper through-holes h1 are provided in positions facing the safety valves SV. In other words, the number of the upper through-holes h1 arranged along the first direction DR1 is the same as the number of the electricity storage cells 100 included in each of the electricity storage stacks 11 to 16.

The lower plate portion 212B is provided below the upper plate portion 212A. The lower plate portion 212B may be formed in a flat plate shape. The lower plate portion 212B has at least one lower through-hole h2 provided in a position facing at least two upper through-holes h1. At least one lower through-hole h2 is provided in a position overlapping in the up-down direction with at least part of each of a pair of the upper through-holes h1 adjacent to each other in the first direction DR1. In the present embodiment, at least one lower through-hole h2 includes a plurality of lower through-holes h2. As shown in FIG. 4, each of the lower through-holes h2 overlaps in the up-down direction with the upper through-holes h1 adjacent to each other in the first direction DR1.

A length L2 of the lower through-hole h2 in the first direction DR1 is greater than a length L1 of each of the upper through-holes h1 in the first direction DR1. In the present embodiment, the length in the first direction DR1 from a first end portion to a second end portion of the upper through-holes h1 adjacent to each other in the first direction DR1 is equivalent to the length L2 of the single lower through-hole h2 in the first direction DR1.

As shown in FIG. 4, a protection member 280 may be provided on the upper plate portion 212A. The protection member 280 has a plurality of heat insulation members 282 and a holding member 284.

Each of the heat insulation members 282 has a shape that closes the upper through-hole h1. The heat insulation members 282 have a function that protects the electricity storage cells 100 from gas emitted from the safety valves SV. Each of the heat insulation members 282 is formed by mica obtained by hardening a natural inorganic mineral by thermal pressing, for example.

The holding member 284 holds the heat insulation members 282 arranged in the first direction DR1. Each of the heat insulation members 282 may be caused to adhered to a lower surface of the holding member 284. The holding member 284 is formed by polypropylene, for example.

The peripheral wall 214 rises upward from peripheral edge portions of the bottom wall 212. The peripheral wall 214 has a shape that surrounds the electricity storage stacks 11 to 16. The peripheral wall 214 may be formed in a hollow shape. The peripheral wall 214 has a front wall 214a and a pair of side walls 214b.

The front wall 214a is formed on one side (the left side in FIG. 3) of the electricity storage stacks 11 to 16 in the first direction DR1. The front wall 214a extends in the second direction DR2. In the present embodiment, one side in the first direction DR1 is equivalent to the front side in the front-rear direction of the vehicle.

The side walls 214b face each other to be spaced apart from each other in the second direction DR2. Each of the side walls 214b extends in the first direction DR1. An end portion (front end portion) of each of the side walls 214b on one side thereof in the first direction DR1 is joined to the front wall 214a.

The partition walls 216 partition a space surrounded by the bottom wall 212 and the peripheral wall 214 into a space in which each of the electricity storage stacks 11 to 16 is disposed and a space other than the space. The partition walls 216 are disposed to be spaced apart from each other in the first direction DR1. Each of the partition walls 216 extends in the second direction DR2. Each of the partition walls 216 may be formed in a hollow shape. The partition walls 216 have a function of restraining each of the electricity storage stacks 11 to 16 from both sides in the first direction DR1. As shown in FIG. 3, regarding the partition wall 216 formed on one side (front side) in the first direction DR1, end portions of the partition wall 216 in the second direction DR2 are spaced apart from the side walls 214b. Regarding the partition wall 216 formed on the other side (rear side) in the first direction DR1, end portions of the partition wall 216 in the second direction DR2 are joined to the side walls 214b.

The upper cover 220 is disposed above the electricity storage stacks 11 to 16. The upper cover 220 houses the six electricity storage stacks 11 to 16 with the lower case 210. Specifically, the upper cover 220 houses the six electricity storage stacks 11 to 16 with the lower case 210 in a sealed state. A peripheral edge portion of the upper cover 220 is connected to an upper end portion of the peripheral wall 214 by a bolt and the like via a seal member.

The panel member 230 is provided below the lower case 210. The panel member 230 has a function of protecting the bottom wall 212 of the lower case 210. The panel member 230 may be formed in a flat plate shape. Peripheral edge portions of the panel member 230 are connected to a lower surface of the lower case 210 via a seal member.

As shown in FIG. 4, a space S is formed between the panel member 230 and the bottom wall 212. Each space S functions as a smoke exhaust passage (hereinafter referred to as a "smoke exhaust passage S"). The smoke exhaust passage S is a passage for emitting the gas emitted from the safety valves SV of the electricity storage cells 100 to the outside of the casing 200.

As shown in FIG. 3 and FIG. 4, a smoke exhaust duct portion 218 is formed in the peripheral wall 214. The smoke exhaust duct portion 218 extends upward from the bottom wall 212. The smoke exhaust duct portion 218 guides the gas upward from the smoke exhaust passage S. An explosion proof valve 290 is provided on an end portion of the smoke exhaust duct portion 218 on the downstream side thereof. The explosion proof valve 290 releases the pressure in the casing 200. The explosion proof valve 290 opens when the pressure in the casing 200 becomes equal to or more than a reference value. The explosion proof valve 290 is configured by a check valve. As shown in FIG. 4, when gas is emitted from any one of the electricity storage cells 100, the gas spreads in the first direction DR1 through the smoke exhaust passage S and is emitted outside the casing 200 through the smoke exhaust duct portion 218 and the explosion proof valve 290.

The equipment 300 is housed in the casing 200. As shown in FIG. 3, the equipment 300 is disposed in a space formed between the peripheral wall 214 and the partition wall 216 formed on the other side of the lower case 210 in the first direction DR1, in other words, the other side (rear side) in the first direction DR1. The equipment 300 may include a junction box. The equipment 300 may include a relay, a control equipment, and the like.

The equipment cooler 350 cools the equipment 300. As shown in FIG. 3 and FIG. 4, the equipment cooler 350 is provided between the bottom wall 212 and the equipment 300. A thermally conductive adhesive 900 may be provided between the equipment cooler 350 and the bottom wall 212.

The refrigerant piping 400 is routed in the casing 200. The refrigerant piping 400 is joined to the equipment cooler 350 and each of the cooling plates 150. As shown in FIG. 2 and FIG. 3, an inlet port 181 and an outlet port 182 are provided in the front wall 214a of the peripheral wall 214. The refrigerant piping 400 is connected to the inlet port 181 and the outlet port 182. Therefore, the refrigerant (water, oil, and the like) supplied from the inlet port 181 flows into the equipment cooler 350 and each of the cooling plates 150 through the refrigerant piping 400 and cools the equipment 300 and each of the electricity storage cells 100. Then, the refrigerant flows out from the outlet port 182 through the refrigerant piping 400.

As shown in FIG. 3, the refrigerant piping 400 has upstream piping 410 and downstream piping 420.

An end portion of the upstream piping 410 on the upstream side thereof is joined to the inlet port 181. An end portion of the upstream piping 410 on the downstream side thereof is joined to a first end portion of the equipment cooler 350 in the second direction DR2. The upstream piping 410 is routed so as to pass through a place between the front wall 214a and the partition wall 216 formed on one side in the first direction DR1 and a place between the electricity storage stack 11 disposed on one side in the second direction DR2 and the side wall 214b. The upstream piping 410 is connected to a first end portion of each of the cooling plates 150 in the second direction DR2.

An end portion of the downstream piping 420 on the upstream side thereof is joined to a second end portion of the equipment cooler 350 in the second direction DR2. An end portion of the downstream piping 420 on the downstream side thereof is joined to the outlet port 182. The downstream piping 420 is routed so as to pass through a place between the front wall 214a and the partition wall 216 formed on one side in the first direction DR1 and a place between the electricity storage stack 16 disposed on the other side in the second direction DR2 and the side wall 214b. The downstream piping 420 is connected to a second end portion of each of the cooling plates 150 in the second direction DR2.

As shown in FIG. 4, in the electricity storage apparatus 10 described above, when emissions are emitted downward from the safety valve SV due to short-circuiting and the like in any of the electricity storage cells 100, the emissions collide with the protection member 280. As a result, the holding member 284 melts and the heat insulation member 282 is split open, and hence the emissions flow into the smoke exhaust passage S.

In the present embodiment, the length L2 of the lower through-hole h2 in the first direction DR1 is greater than the length L1 of each of the upper through-holes h1 in the first direction DR1, and hence the pressure loss generated when gas contained in the emissions passes through the lower through-hole h2 is reduced. Therefore, the gas effectively flows into the smoke exhaust passage S.

Then, the gas contained in the emissions spreads in the smoke exhaust passage S and is emitted from the casing 200 through the explosion proof valve 290. Therefore, cases in which content (so-called debris) of the electricity storage cell 100 contained in the emissions emitted from the electricity storage cell 100 adheres to the external terminal 116 and the like of the electricity storage cell 100 are reduced.

Hereinafter, modifications of the above embodiment will be described.

### First Modification

As shown in FIG. 6, it is possible for the lower through-hole h2 to overlap with only a single upper through-hole h1 in the up-down direction. The length L2 of the lower through-hole h2 in the first direction DR1 is greater than the length L1 of each of the upper through-holes h1 in the first direction DR1 in this example as well.

### Second Modification

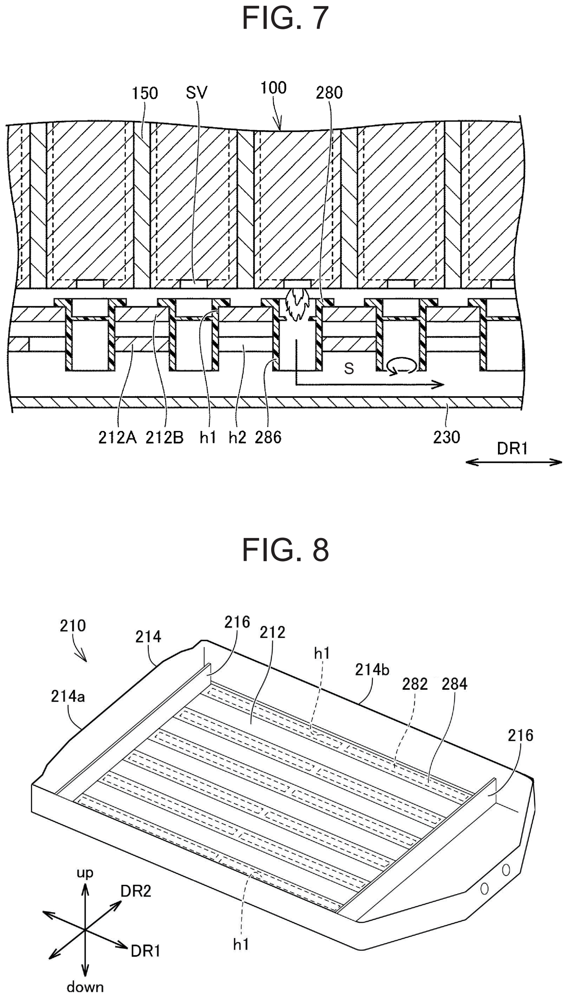

As shown in FIG. 7, the electricity storage apparatus 10 may further include the protection member 280 provided in the bottom wall 212. The protection member 280 includes a plurality of cylinder portions 286. The cylinder portions 286 protrude toward the panel member 230 from the upper through-holes h1. Lower end portions of the cylinder portions 286 are spaced apart from the panel member 230 to the upper side of the panel member 230. The protection member 280 is formed by synthetic resin, for example.

In this aspect, when gas that has flowed into the smoke exhaust passage S through the cylinder portion 286 spreads in the smoke exhaust passage S, the gas forms a rotational flow in the cylinder portion 286 positioned below the electricity storage cell 100 adjacent to the electricity storage cell 100 that has emitted the emissions as shown in FIG. 7. Therefore, cases in which the gas comes into contact with the safety valve SV of the adjacent electricity storage cell 100 by rising in the cylinder portion 286 are reduced.

### Third Modification

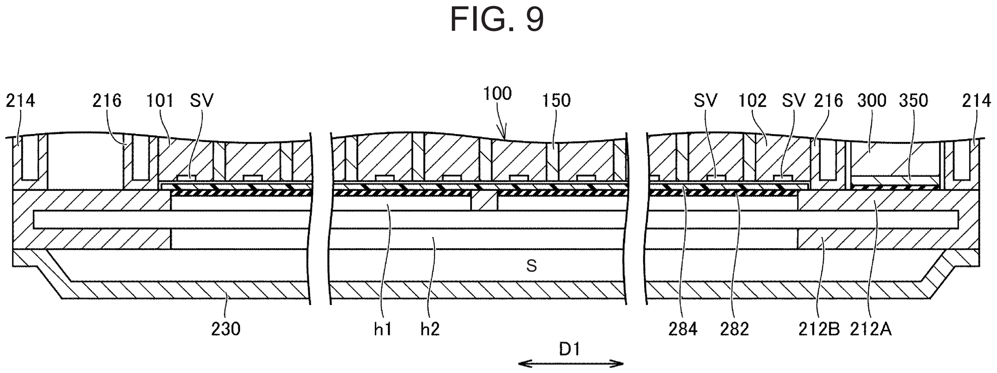

As shown in FIG. 8 and FIG. 9, two upper through-holes h1 may be provided in the upper plate portion 212A, and a single lower through-hole h2 may be provided in the lower plate portion 212B. The lower through-hole h2 is configured by a single through-hole extending from a position overlapping in the up-down direction with the safety valve SV of the electricity storage cell 101 disposed on a first end side in the first direction DR1 so as to reach a position overlapping in the up-down direction with the safety valve SV of an electricity storage cell 102 disposed on a second end side in the first direction DR1.

In this aspect, the gas contained in the emissions emitted from one electricity storage cell 100 is reduced in the pressure loss generated when the gas passes through the lower through-hole h2. In addition, the bottom wall 212 is reduced in weight.

It is understood by those skilled in the art that the exemplary embodiment described above is specific examples of the following aspects.

### Aspect 1

An electricity storage apparatus comprising:
a plurality of electricity storage cells arranged along one direction;
a bottom wall disposed below the electricity storage cells; and
a panel member that is provided below the bottom wall and defines a smoke exhaust passage with the bottom wall, wherein
a safety valve is provided on a lower surface of each of the electricity storage cells, the bottom wall includes
   an upper plate portion provided below the electricity storage cells, and
   a lower plate portion provided below the upper plate portion,
the upper plate portion includes at least two upper through-holes, each provided in a position facing a corresponding one of the safety valves,
the lower plate portion includes at least one lower through-hole provided in a position facing the at least two upper through-holes, and
a length of the lower through-hole in the one direction is greater than a length of each of the upper through-holes in the one direction.

In this electricity storage apparatus, the pressure loss generated when gas contained in emissions emitted from the electricity storage cell passes through the lower through-hole is reduced, and hence the gas effectively flows into the smoke exhaust passage. Therefore, cases in which the gas contained in the emissions emitted from one electricity storage cell comes into contact with the electricity storage cell adjacent to the one electricity storage cell are reduced.

### Aspect 2

The electricity storage apparatus according to Aspect 1, wherein the at least one lower through-hole is provided in a position that overlaps in an up-down direction with at least part of each of a pair of the upper through-holes adjacent to each other in the one direction.

### Aspect 3

The electricity storage apparatus according to Aspect 1, wherein the at least one lower through-hole is configured by a single through-hole extending from a position that overlaps with the safety valve of one of the electricity storage cells disposed on a first end side in the one direction to a position that overlaps with the safety valve of one of the electricity storage cells disposed on a second end side in the one direction.

In this aspect, the gas flows into the smoke exhaust passage more effectively, and the bottom wall is reduced in weight.

### Aspect 4

The electricity storage apparatus according to Aspect 1 or 2, further comprising a protection member provided on the bottom wall, wherein the protection member includes a heat insulation member configured to close each of the at least two upper through-holes.

In this aspect, cases in which the gas contained in the emissions emitted from one electricity storage cell comes into contact with the safety valve of the adjacent electricity storage cell are reduced.

### Aspect 5

The electricity storage apparatus according to Aspect 1 or 2, further comprising a protection member provided on the bottom wall, wherein the protection member includes a plurality of cylinder portions each protruding toward the panel member from a corresponding one of the at least two upper through-holes.

In this aspect, cases in which the gas contained in the emissions emitted from one electricity storage cell comes into contact with the safety valve of the adjacent electricity storage cell are reduced.

It is to be understood that the embodiment disclosed above is merely an example in all aspects and in no way intended to limit the invention. The scope of the present disclosure is defined by the scope of the claims and not by the description of the embodiment. All modifications made within the scope and spirit equivalent to those of the claims are included in the invention.

## Claims

1. An electricity storage apparatus (10) comprising:
a plurality of electricity storage cells (100) arranged along one direction (DR1);
a bottom wall (212) disposed below the electricity storage cells (100); and
a panel member (230) that is provided below the bottom wall (212) and defines a smoke exhaust passage (S) with the bottom wall (212), wherein
a safety valve (SV) is provided on a lower surface of each of the electricity storage cells (100),
the bottom wall (212) includes
an upper plate portion (212A) provided below the electricity storage cells (100),
and
a lower plate portion (212B) provided below the upper plate portion (212A),
the upper plate portion (212A) includes at least two upper through-holes (h1), each provided in a position facing a corresponding one of the safety valves (SV),
the lower plate portion (212B) includes at least one lower through-hole (h2) provided in a position facing the at least two upper through-holes (h1), and
a length (L2) of the lower through-hole (h2) in the one direction (DR1) is greater than a length (L1) of each of the upper through-holes (h1) in the one direction (DR1).

2. The electricity storage apparatus (10) according to claim 1, wherein the at least one lower through-hole (h2) is provided in a position that overlaps in an up-down direction with at least part of each of a pair of the upper through-holes (h1) adjacent to each other in the one direction (DR1).

3. The electricity storage apparatus (10) according to claim 1, wherein the at least one lower through-hole (h2) is configured by a single through-hole extending from a position that overlaps with the safety valve (SV) of one of the electricity storage cells (100) disposed on a first end side in the one direction (DR1) to a position that overlaps with the safety valve (SV) of one of the electricity storage cells (100) disposed on a second end side in the one direction (DR1).

4. The electricity storage apparatus (10) according to claim 1, further comprising a protection member (280) provided on the bottom wall (212), wherein the protection member (280) includes a heat insulation member (282) configured to close each of the at least two upper through-holes (h1).

5. The electricity storage apparatus (10) according to claim 1, further comprising a protection member (280) provided on the bottom wall (212), wherein the protection member (280) includes a plurality of cylinder portions (286) each protruding toward the panel member (230) from the at least two upper through-holes (h1).

6. The electricity storage apparatus (10) according to claim 5, wherein a lower end portion of the protection member (280) is spaced apart from the panel member (230) to an upper side of the panel member (230).
